(19) Europäisches Patentamt / European Patent Office / Office européen des brevets

(11) EP 2 576 054 B1

(12) **EUROPÄISCHE PATENTSCHRIFT**

(45) Veröffentlichungstag und Bekanntmachung des Hinweises auf die Patenterteilung:
**14.05.2014 Patentblatt 2014/20**

(21) Anmeldenummer: **11723042.5**

(22) Anmeldetag: **27.05.2011**

(51) Int Cl.:
***B01J 31/16*** *(2006.01)* ***C08G 73/02*** *(2006.01)*

(86) Internationale Anmeldenummer:
**PCT/EP2011/058758**

(87) Internationale Veröffentlichungsnummer:
**WO 2011/151268 (08.12.2011 Gazette 2011/49)**

(54) **POLYALKYLENPOLYAMINE DURCH HOMOGEN-KATALYSIERTE ALKOHOL-AMINIERUNG**

POLYALKYLENE POLYAMINES OBTAINED BY HOMOGENEOUSLY CATALYZED ALCOHOL AMINATION

POLYALKYLÈNES POLYAMINES OBTENUS PAR AMINATION D'ALCOOLS À CATALYSEUR HOMOGÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.05.2010 EP 10164492**

(43) Veröffentlichungstag der Anmeldung:
**10.04.2013 Patentblatt 2013/15**

(73) Patentinhaber: **BASF SE**
**67056 Ludwigshafen (DE)**

(72) Erfinder:
- **SCHAUB, Thomas**
  **67433 Neustadt/Wstr. (DE)**
- **BUSCHHAUS, Boris**
  **68161 Mannheim (DE)**
- **MELDER, Johann-Peter**
  **67459 Böhl-Iggelheim (DE)**
- **PACIELLO, Rocco**
  **67098 Bad Dürkheim (DE)**
- **HÜFFER, Stephan**
  **80639 München (DE)**
- **WITTELER, Helmut**
  **67157 Wachenheim (DE)**

(56) Entgegenhaltungen:
**DE-A1- 2 530 042 DE-A1- 19 545 874**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 576 054 B1

## Beschreibung

Die vorliegende Erfindung betrifft ein Verfahren zur Herstellung von Polyalkylenpolyaminen durch katalytische Alkohol-Aminierung von Alkanolaminen oder von Di- oder Polyaminen mit Di- oder Polyolen.

Polyethylenimine sind wertvolle Produkte mit einer Vielzahl von unterschiedlichen Verwendungen. Beispielsweise werden Polyethylenimine eingesetzt: a) als Haftvermittler für Druckfarben für Laminatfolien; b) als Hilfsmittel (Adhäsion) zur Herstellung von mehrlagigen Komposit-Folien, wobei nicht nur unterschiedliche Polymerschichten, sondern auch Metallfolien kompatibilisiert werden; c) als Haftvermittler für Klebstoffe, beispielsweise in Verbindung mit Polyvinylalkohol, -butyrat, und -acetat und Styrol-Copolymeren, oder als Kohäsionspromotor für Etikettenklebstoffe; d) niedermolekulare PEI können zudem als Vernetzer/Härter in Epoxidharzen und Polyurethanklebstoffen verwendet werden; e) als Primer in Lackanwendungen zur Verbesserung der Haftung auf Substraten wie Glas, Holz, Kunststoff und Metall; f) zur Verbesserung der Nasshaftung in Standard-Dispersionsfarben sowie zur Verbesserung der Instantan-Regenbeständigkeit von Anstrichfarben beispielsweise für Fahrbahn-Markierungen; g) als Komplexierungsmittel mit hohem Bindevermögen für Schwermetallen wie Hg, Pb, Cu, Ni und Flockungsmittel in der Wasserbehandlung/Wasseraufbereitung; h) als Penetrationshilfsmittel für aktive Metallsalz-Formulierungen im Holzschutz; i) als Korrosionsinhibitoren für Eisen und Buntmetalle; j) zur Immobilisierung von Proteinen und Enzymen. Für diese Anwendungen lassen sich auch andere Polyalkylenpolyamine, welche nicht vom Ethylenimin abegeleitet sind, einsetzen.

Polyethylenimine werden gegenwärtig durch die Homopolymerisation von Ethylenimin erhalten. Ethylenimin ist ein hochreaktives, korrosives und toxisches Zwischenprodukt, welches auf verschiedenen Wegen dargestellt werden kann (Aziridine, Ulrich Steuerle, Robert Feuerhake; in Ullmann's Encyclopedia of Industrial Chemistry, 2006, Wiley-VCH, Weinheim).

Im $\beta$-Chlorethylamin-Prozess wird Ethylenimin durch die Reaktion von $\beta$-Chlorethylamin mit NaOH erhalten. Dabei kann es zur ungewollten Polymerisation des $\beta$-Chlorethylamin durch HCl-Abspaltung kommen, welche sorgfältig vermieden werden muss. Nachteilig ist außerdem der Einsatz von zwei Äquivalenten NaOH und die Bildung des Koppelproduktes NaCl.

Im Dow-Prozess lässt sich das Ethylenimin durch Umsetzung von 1,2-Dichlorethan mit drei Äquivalenten Ammoniak erhalten. Nachteilig sind der Einsatz großer Mengen Ammoniak, die Bildung des Koppelproduktes Ammoniumchlorid, die Korrosivität des Reaktionsgemischs sowie Verunreinigungen des Produkts.

Beim Wencker-Prozess wird im ersten Schritt 2-Aminoethanol mit Schwefelsäure zu 2-Aminoethylhydrogensulfat umgesetzt. Aus diesem wird dann im zweiten Schritt durch Zugabe von zwei Äquivalenten NaOH das Ethylenamin erhalten. Auch hier ist der Einsatz von Schwefelsäure und NaOH sowie die Bildung des Koppelproduktes Natriumsulfat nachteilig.

Bei der katalytischen Dehydrierung von 2-Aminoethanol wird das Ethylenimin durch die katalytische Dehydrierung von 2-Aminoethanol in der Gasphase bei 250 bis 450°C erhalten. Nachteilig an diesem Verfahren sind die aufwendige Produktaufarbeitung durch Destillation, der hohe Energiebedarf sowie die niedrige Katalysatorlebensdauer.

Neben den genannten Nachteilen bei den Verfahren zur Herstellung von Ethylenimin ist die Synthese von Polyethyleniminen ausgehend von dieser Ausgangsverbindung problematisch, da das hochreaktive, toxische und korrosive Ethylenimin gehandhabt werden muss. Ebenso muss sichergestellt werden, dass kein Ethylenimin in den erhaltenen Produkten bzw. Abwasserströmen verbleibt.

Für die Herstellung von nicht vom Aziridin abgeleiteten Polyalkylenpolyaminen $-[(CH_2)_xN]-$ mit Alkylengruppen $> C_2$ ($x > 2$) gibt es keine der Aziridinroute analoge Verfahren, wodurch es bisher keinen kostengünstigen Prozess zu deren Herstellung.

Die homogen-katalysierte Aminierung von Alkoholen ist aus der Literatur für die Synthese von primären, sekundären und tertiären Aminen ausgehend von Alkoholen und Aminen bekannt, wobei in allen beschriebenen Ausführungen monomere Produkte erhalten werden. In US 3,708,539 ist die Synthese von primären, sekundären und tertiären Aminen unter Verwendung eines Ruthenium-Phosphan-Komplexes beschrieben. In Y. Watanabe, Y. Tsuji, Y. Ohsugi Tetrahedron Lett. 1981, 28, 2667-2670 wird über die Herstellung von Arylaminen durch die Aminierung von Alkoholen mit Anilin unter Verwendung von $[Ru(PPh_3)_3Cl_2]$ als Katalysator berichtet. In EP 0 034 480 A2 wird die Herstellung von N-Alkyl- oder N,N-Dialkylaminen durch die Reaktion von primären oder sekundären Aminen mit einem primären oder sekundären Alkohol unter Verwendung eines Iridium-, Rhodium-, Ruthenium-, Osmium-, Platin-, Palladium- oder Rheniumkatalysators offenbart. In EP 0 239 934 A1 wird die Synthese von mono- und diaminierten Produkten ausgehend von Diolen wie Etyhlenglykol und 1,3-Propandiol mit sekundären Aminen unter Verwendung von Ruthenium- und Iridiumphosphan-Komplexen beschrieben. In K.I. Fujita, R. Yamaguchi Synlett, 2005, 4, 560-571 wird die Synthese von sekundären Aminen durch die Reaktion von Alkoholen mit primären Aminen sowie die Synthese cyclischer Amine durch die Reaktion von primären Aminen mit Diolen durch Ringschluß unter Verwendung von Iridiumkatalysatoren beschrieben. In A. Tillack, D. Hollmann, K. Mevius, D. Michalik, S. Bähn, M. Beller Eur. J. Org. Chem. 2008, 4745-4750, in A. Tillack, D. Hollmann, D. Michalik, M. Beller Tetrahedron Lett. 2006, 47, 8881-8885, in D. Hollmann, S. Bähn, A. Tillack, M. Beller Angew. Chem. Int. Ed. 2007, 46, 8291-8294 sowie in M. Haniti, S.A. Hamid, C.L. Allen, G.W. Lamb,

A.C. Maxwell, H.C. Maytum, A.J.A. Watson, J.M.J. Williams J. Am. Chem. Soc, 2009, 131, 1766-1774 werden Synthesen von sekundären und tertiären Aminen ausgehend von Alkoholen und primären bzw. sekundären Aminen unter Verwendung von homogenen Rutheniumkatalysatoren beschrieben. Über die Synthese von primären Aminen durch die Umsetzung von Alkoholen mit Ammoniak unter Verwendung eines homogenen Rutheniumkatalysators wird in "C. Gunanathan, D. Milstein Angew. Chem. Int. Ed. 2008, 47, 8661-8664" berichtet.

In DE-A 26 24 135 ist die Herstellung von Polyalkylenpolyaminen durch Umsetzung von Alkylendiaminen mit Diolen in Gegenwart von Phosphorsäure, deren Anhydride, Metallsalze und Ester bei Temperaturen von 250 bis 350°C in flüssiger Phase beschrieben.

Aufgabe der vorliegenden Erfindung ist es, ein Verfahren zur Herstellung von Polyalkylenpolyaminen zu finden, bei dem kein Aziridin eingesetzt wird und auch keine unerwünschten Koppelprodukte gebildet werden.

Gelöst wird die Aufgabe durch ein Verfahren zur Herstellung von Polyalkylenpolyaminen durch katalysierte Alkohol-Aminierung, bei dem (i) aliphatische Aminoalkohole miteinander oder (ii) aliphatische Diamine oder Polyamine mit aliphatischen Diolen oder Polyolen unter Wasserabspaltung in Gegenwart eines Katalysators umgesetzt werden, wobei der Katalysator ein Übergangsmetallkomplexkatalysator ist, der homogen in dem Reaktionsmedium gelöst vorliegt.

Erfindungsgemäß werden Polyalkylenpolyamine durch Umsetzung von (i) aliphatischen Aminoalkoholen miteinander unter Wasserabspaltung oder von (ii) aliphatischen Diaminen oder Polyaminen mit aliphatischen Diolen oder Polyolen unter Wasserabspaltung, jeweils in Gegenwart eines Katalysators, erhalten. Geeignete aliphatische Aminoalkohole enthalten mindestens eine primäre oder sekundäre Aminogruppe und mindestens eine OH-Gruppe. Beispiele sind lineare oder verzweigte Alkanolamine wie Monoethanolamin, Diethanolamin, 3-Aminopropan-1-ol, 2-Aminopropan-1-ol, 4-Aminobutan-1-ol, 2-Aminobutan-1-ol, 3-Aminobutan-1-ol, 5-Aminopentan-1-ol, 1-Aminopentan-2-ol, 6-Aminohexan-1-ol, 2-Aminohexan-1-ol, 7-Aminoheptan-1-ol, 2-Aminoheptan-2-ol, 8-Aminooctan-1-ol. 2-Aminooctan-1-ol, 1-(2-Hydroxyethyl)piperazin, 2-(2-Aminoethoxy)ethanol, Butylethanolamin, Propylethanolamin, Ethylethanolamin und Methylethanolamin.

Geeignete aliphatische Diamine enthalten mindestens zwei primäre oder mindestens eine primäre und eine sekundäre oder mindestens zwei sekundäre Aminogruppen, bevorzugt enthalten sie zwei primäre Aminogruppen. Beispiele sind Ethylendiamin, 1,3-Propylendiamin, 1,2-Propylendiamin, 1,4-Butylendiamin, 1,2-Butylendiamin, 1,5-Diaminopentan, 1,2-Diaminopentan 1,6-Diaminohexan, 1,2-Diaminohexan 1,7-Diaminoheptan, 1,2-Diaminoheptan, 1,8-Diaminooctan, 1,2-Diamniooctan,3,3'-dimethyl-4,4'-diaminodicyclohexylmethan, 4,4'-Diaminodicyclohexylmethan, Isophorondiamin, 2,2-Dimethylpropan-1,3-diamin, 4,7,10-Trioxatridecane-1,13-diamin, 4,9-Dioxadodecan-1,12-diamin, Polyetheramine, Piperazin, 3-(Cyclohexylamino)propaylamin, 3-(Methylamino)propylamin und N,N-Bis(3-Amino-propyl)methylamin.

Beispiele für aliphatische Diole sind Ethylenglykol, 1,2-Propylenglykol, 1,3-Propylenglykol, 1,4-Butylenglykol, Butan-2,3-diol, Neopentylglykol, 1,2-Butylengylkol, 2-Methyl-1,3-propandiol, 1,5-Pentandiol, 1,2-Pentandiol, 1,6-Hexandiol, 1,2-Hexandiol, 1,7-Heptandiol, 1,2-Heptandiol 1,8-Octandiol, 1,2-Octandiol, 2,4-Dimethyl-2,5-hexandiol, PolyTHF, 1,4-Bis-(2-hydroxyethyl)piperazin, Butyldiethanolamin und Methyldiethanolamin.

Bevorzugte erfindungsgemäß erhältliche Polyalkylenpolyamine enthalten $C_2$-$C_{10}$-Alkyleneinheiten, besonders bevorzugt $C_2$-$C_6$-Alkyleneinheiten. Diese können linear oder verzweigt sein, bevorzugt sind sie linear. Beispiele sind Ethylen, 1,3-Propylen, 1,4-Butylen, 1,5-Pentylen, 1,2-Pentylen, Neopentylen und 1,6-Hexylen. Auch Cycloalkyleneinheiten sind möglich, beispielsweise 1,3- und 1,4-Cyclohexylen.

Es können auch Gemische von aliphatischen Aminoalkoholen oder Gemische von Alkandiolen oder Gemischen von Diaminoalkanen in den jeweiligen Umsetzungen eingesetzt werden. Die resultierenden Polyalkylenpolyamine können Alkyleneinheiten unterschiedlicher Länge enthalten.

Es können auch polyfunktionelle Aminoalkohole mit mehr als einer OH-Gruppe oder mehr als einer primären oder sekundären Aminogruppe miteinander umgesetzt werden. Dabei werden hochverzweigte Produkte erhalten. Beispiele für polyfunktionelle Aminoalkohole sind Diethanolamin, N-(2-Aminoethyl)ethanolamin und Diisopropanolamin.

Es können auch Polyole oder Gemische von Diolen und Polyolen mit Diaminen umgesetzt werden. Es können auch Polyamine oder Gemische von Diaminen und Polyaminen mit Diolen umgesetzt werden. Es können auch Polyole oder Gemische von Diolen und Polyolen mit Polyaminen oder Gemischen von Diaminen und Polyaminen umgesetzt werden. Dabei werden hochverzweigte Produkte erhalten. Beispiele für Polyole sind Glycerin, Trimethylolpropan, Sorbitol, Triethanolamin und Triisopropanolamin. Beispiele für Polyamine sind Diethylentriamin, Tris-(aminoethyl)amin, 1,3,5-Triazacyclohexan, 3-(2-Aminoethylamino)propylamin, Dipropylentriamin und N,N'-Bis-(3-aminopropyl)-ethylendiamin.

Bevorzugt werden Diole und Diamine in etwa äquimolar eingesetzt, beispielsweise in einem Molverhältnis von 0,7 - 1,3 : 1.

Der Katalysator enthält vorzugsweise mindestens ein Element der Gruppen 8, 9 oder 10 des Periodensystems. Der Katalysator ist ein Homogenkatalysator, der in dem Reaktionsmedium gelöst vorliegt. Die Alkohol-Aminierung kann in Gegenwart oder in Abwesenheit eines zusätzlichen Lösungsmittels durchgeführt werden. Die Alkohol-Aminierung kann in einem einphasigen oder in einem zweiphasigen flüssigen System bei Temperaturen von im Allgemeinen 20 bis

250 °C durchgeführt werden. Im Falle von zweiphasigen Reaktionssystemen besteht die Oberphase aus einem unpolaren Lösungsmittel, welches den Großteil des homogen gelösten Katalysators enthält, und die Unterphase aus den polaren Edukten, den gebildeten Polyamine sowie Wasser.

In einer bevorzugten Ausführungsform der Erfindung wird (i) Monoethanolamin oder (ii) Ethylenglykol mit Ethylendiamin in Gegenwart eines Katalysators zu Polyethylenimin umgesetzt.

Die Polyethylenimine werden nach Gleichung 1 oder Gleichung 2 gebildet. Die Zahl der Ethylenimin-Einheiten n liegt im Allgemeinen zwischen 3 und 50 000.

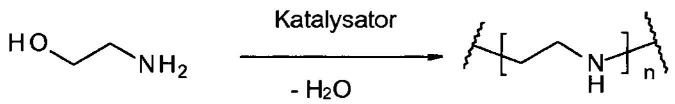


Ethanolamin Polyethylenimin

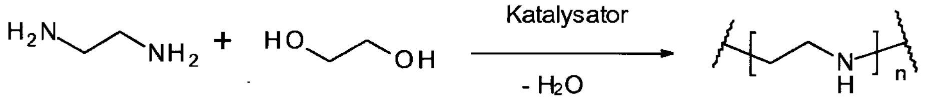


Ethylendiamin Ethylenglykol Polyethylenimin

Die so erhaltenen Polyethylenimine können als Endgruppen an den Kettenenden so-wohl $NH_2$- als auch OH-Gruppen tragen.

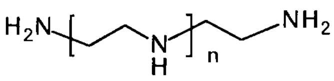

$NH_2$-Endgruppen

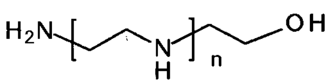

$NH_2$- und OH-Endgruppen

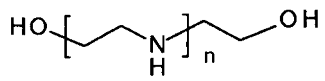

OH-Endgruppen

Das zahlenmittlere Molekulargewicht Mn der erhaltenen Polyethylenimine beträgt im Allgemeinen von 400 bis 2 000 000, bevorzugt von 800 bis 750 000 und besonders bevorzugt von 800 bis 100 000. Die Molmassenverteilung Mw/Mn liegt im Allgemeinen im Bereich von 1,2 bis 20, bevorzugt von 1,5-7,5. Die kationische Ladungsdichte (bei pH 4-5) liegt im Allgemeinen im Bereich von 4 bis 22 mequ/g Trockensubstanz, bevorzugt im Bereich von 6 bis18 mequ/g. Bevorzugt werden Polyethylenimine mit einem hohen Verzweigungsgrad (Degree of Branching, DB) gebildet. Dieser wird per 13C-NMR bestimmt und ist wie folgt definiert:

$$DB = D + T/D + T + L$$

mit D (dendritisch) entsprechend dem Anteil tertiärer Aminogruppen, L (linear) entsprechend dem Anteil sekundärer Aminogruppen und T (terminal) entsprechend dem Anteil primärer Aminogruppen.

DB liegt Allgemeinen im Bereich von 0,1 - 1 und ist bevorzugt > 0,3.

Die nach dem erfindungsgemäßen Verfahren erhaltenen Polyethylenimine können sowohl in linearer Form als auch in verzweigter bzw. mehrfach-verzweigter Form vorliegen, als auch ringförmige Struktureinheiten aufweisen.

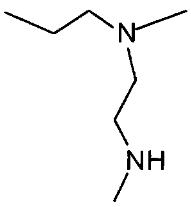

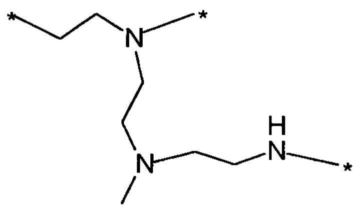

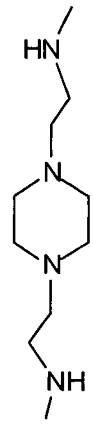

Dabei ist die Verteilung der Struktureinheiten (linear, verzweigt bzw. cyclisch) statistisch. Die so erhaltenen Polyethylenimine unterscheiden sich von den aus Ethylenimin hergestellten Polyethyleniminen durch das Vorliegen von OH-Endgruppen.

In einer weiteren Ausführungsform der Erfindung wird ein linearer alpha, omega-Aminoalkohol mit mehr als 2 C-Atomen in der Alkylenkette in Gegenwart eines Katalysators umgesetzt.

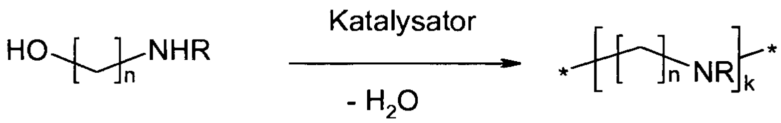


Alkanolamin
(R =H, Alkylgruppe)

Polyalkenylpolyamin

Bevorzugt sind Alkanolamine wie 3-Aminopropan-1-ol, 2-Aminopropan-1-ol, 4-Aminobutan-1-ol, 2-Aminobutan-1-ol, 3-Aminobutan-1-ol, 5-Aminopentan-1-ol, 2-Aminopentan-1-ol, 6-Aminohexan-1-ol, 2-Aminohexan-1-ol, 7-Aminoheptan-1-ol, 2-Aminoheptan-1-ol, 8-Aminooctan-1-ol. 2-Aminooctan-1-ol, 1-(2-Hydroxyethyl)piperazin und 2-(2-Aminoethoxy)ethanol.

Besonders bevorzugt sind 3-Aminopropan-1-ol und 2-Aminopropan-1-ol.

In einer weiteren Ausführungsform der Erfindung werden lineare Alkylendiamine mit mehr als 2 C-Atomen in der Alkylenkette mit linearen Alkandiolen mit mehr als 2 C-Atomen in der Alkylenkette in Gegenwart eines Katalysators umgesetzt.

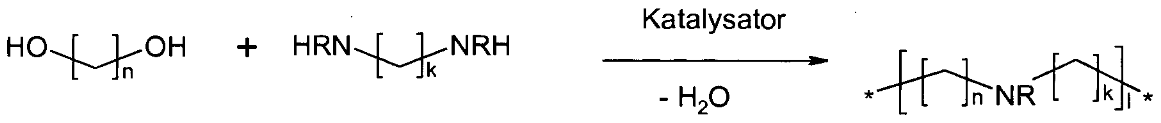


Diol

Diamin
(R = H, Alkylgruppe)

Polyalkenylpolyamin

Bevorzugte Alkandiole sind 1,2-Propylenglykol, 1,3-Propylenglykol, 1,4-Butylenglykol, Butan-2,3-diol, Neopentylglykol, 1,2-Butylengylkol, 2-Methyl-1,3-propandiol, 1,5-Pentandiol, 1,2-Pentandiol, 1,6-Hexandiol, 1,2-Hexandiol, 1,7-Heptandiol, 1,2-Heptandiol, 1,8-Octandiol, 1,2-Octandiol, 2,4-Dimethyl-2,5-hexandiol, PolyTHF, 1,4-Bis-(2-hydroxyethyl)piperazin, Butyldiethanolamin und Methyldiethanolamin.

Besonders bevorzugt sind 2-Propylenglykol, 1,3-Propylenglykol, 1,4-Butylenglykol, 2-Methyl-1,3-propandiol, 1,6-Hexandiol und Neopentylglykol.

Bevorzugte Alkylendiamine sind 1,3-Propylendiamin, 1,2-Propylendiamin, 1,4-Butylendiamin, 1,2-Butylendiamin, 1,5-Diaminopentan, 1,2-Diaminopentan 1,6-Diaminohexan, 1,2-Diaminohexan 1,7-Diaminoheptan, 1,2-Diaminoheptan, 1,8-Diaminooctan, 1,2-Diamniooctan, 3,3'-Dimethyl-4,4'-diaminodicyclohexylmethan, 4,4'-Diaminodicyclohexylmethan, Isophorondiamin, 2,2-Dimethylpropan-1,3-diamin, 4,7,10-Trioxatridecane-1,13-diamin, 4,9-Dioxadodecan-1,12-diamin, Polyetheramine, Piperazin, 3-(Cyclohexylamino)propylamin, 3-(Methylamino)propylamin und N,N-Bis(3-aminopropyl)methylamin.

Besonders bevorzugt sind 1,3-Propylendiamin, 1,2-Propylendiamin, 1,6-Diaminohexan und 2,2-Dimethylpropan-1,3-diamin.

Der Katalysator ist ein Übergangsmetallkomplexkatalysator, der ein oder mehrere verschiedene Metalle der Nebengruppen des Periodensystems enthält, bevorzugt mindestens ein Element der Gruppen 8, 9 und 10 des Periodensystems, besonders bevorzugt Ruthenium oder Iridium. Die genannten Nebengruppenmetalle liegen in Form von Komplexverbindungen vor. Im Allgemeinen handelt es sich um einen Homogenkatalysator, der in dem Reaktionsmedium gelöst vorliegt. Es kommen zahlreiche verschiedene Liganden in Frage. Geeignete, in den Übergangsmetallkomplexverbindungen vorliegende Liganden sind beispielsweise mit Alkyl oder Aryl substituierte Phosphine, mehrzähnige, mit Alkyl oder Aryl substituierte Phosphine, welche über Arylen- oder Alkylengruppen verbrückt sind, Stickstoff-heterocyclische Carbene, Cyclopentandienyl und Pentamethylcylopentadienyl, Aryl, Olefin-Liganden, Hydrid, Halogenid, Carboxylat, Alkoxylat, Carbonyl, Hydroxid, Trialkylamin, Dialkylamin, Monoalkylamin, Stickstoffaromaten wie Pyridin oder Pyrrolidin und mehrzähnige Amine. Der metallorganische Komplex kann einen oder mehrere verschiedene der genannten Liganden enthalten.

Bevorzugte Liganden sind (einzähnige) Phosphine oder (mehrzähnige) Polyphosphine, beispielsweise Diphosphine, mit mindestens einem unverzweigten oder verzweigten, acyclischen oder cyclischen, aliphatischen, aromatischen oder araliphatischen Rest mit 1 bis 20, bevorzugt 1 bis 12 C-Atomen. Beispiele für verzweigte cyloaliphatische und araliphatischen Resten sind $-CH_2-C_6H_{11}$ und $-CH_2-C_6H_5$. Als geeignete Reste seinen beispielsweise genannt: Methyl, Ethyl, 1-Propyl, 2-Propyl, 1-Butyl, 2-Butyl, 1-(2-Methyl)propyl, 2-(2-Methyl)propyl, 1-Pentyl, 1-Hexyl, 1-Heptyl, 1-Octyl, 1-Nonyl, 1-Decyl, 1-Undecyl, 1-Dodecyl, Cyclopentenyl, Cyclohexyl, Cycloheptyl und Cyclooctyl, Methylcyclopentyl, Methylcyclohexyl, 1-(2-Methyl)-pentyl, 1-(2-Ethyl)-hexyl, 1-(2-Propylheptyl) und Norbornyl, Phenyl, Tolyl und Xylyl. Die Phosphin-Gruppe kann einen, zwei oder drei der genannten unverzweigten oder verzweigten acyclischen oder cyclischen, aliphatischen, aromatischen oder araliphatischen Reste enthalten. Diese können gleich oder verschieden sein.

In den genannten unverzweigten oder verzweigten, acyclischen oder cyclischen, aliphatischen, aromatischen oder araliphatischen Resten können einzelne Kohlenstoffatome auch durch weitere Phosphingruppen substituiert sein. Somit sind auch mehrzähnige, beispielsweise zwei- oder dreizähnige Phosphinliganden umfasst, deren Phosphingruppen durch Alkylen- oder Arylengruppen verbrückt sind. Vorzugsweise sind die Phosphingruppen durch 1,2-Phenylen-, Methylen-, 1,2-Ethylen-, 1,2-Dimethyl-1,2-Ethylen-, 1,3-Propylen-, 1,4-Butylen- und 1,5-Propylen-Brücken verbrückt.

Besonders geeignete einzähnige Phosphinliganden sind Triphenylphosphin, Tritolylphosphin, Tri-n-butylphosphin, Tri-n-octylphosphin, Trimethylphosphin und Triethylphosphin.

Besonders geeignete mehrzähnige Phosphinliganden sind Bis(diphenylphosphino)methan 1,2-Bis(diphenylphosphino)ethan, 1,2-Dimethyl-1,2-bis(diphenylphosphino)ethan, 1,2-Bis(dicyclohexylphosphino)ethan, 1,2-Bis(diethylphosphino)ethan, 1,3-Bis(diphenylphosphino)propan, 1,4-Bis(diphenylphosphino)butan, 1,5-Bis(diphenylphosphino)propan und 1,1,1-Tris(diphenylphosphinomethyl)ethan.

Als besonders geeignete Liganden seien auch Cyclopentadienyl sowie dessen mit Alkyl, Aryl und/oder Hydroxy ein- bis fünffach-substituierte Derivate wie beispielsweise Methylcyclopentadienly, Pentamethylcyclopentadienyl, Tetraphenylhydroxycyclopentadienyl und Pentaphenylcyclopentadienyl genannt. Weiterhin besonders geeignete Liganden sind Indenyl und dessen substituierte Derivate. Ebenfalls besonders geeignete Liganden sind Chlorid, Hydrid und Carbonyl. Der Übergangsmetallkomplexkatalysator kann mehrere verschiedene der genannten Liganden enthalten.

Die homogenen Katalysatoren können sowohl direkt in ihrer aktiven Form eingesetzt werden als auch ausgehend von üblichen Standardkomplexen wie beispielsweise $[Ru(p\text{-}cymene)Cl_2]_2$, $[Ru(benzol)Cl_2]_n$, $[Ru(CO)_2Cl_2]_n$, $[Ru(CO)_3Cl_2]_2$ [Ru(COD)(allyl)], $[RuCl_3*H_2O]$, $[Ru(acteylacetonat)_3]$, $[Ru(DMSO)_4Cl_2]$, $[Ru(PPh_3)_3(CO)(H)Cl]$, $[Ru(PPh_3)_3(CO)Cl_2]$, $[Ru(PPh_3)_3(CO)(H)_2]$, $[Ru(PPh_3)_3Cl_2]$, $[Ru(cyclopentadienyl)(PPh_3)_2Cl]$, $[Ru(cylopentadienly)(CO)_2Cl]$, $[Ru(cylopentadienly)(CO)_2H]$, $[Ru(cylopentadienly)(CO)_2]_2$, $[Ru(pentamethylcylopentadienly)(CO)_2Cl]$, $[Ru(pentamethylcylopentadienly)(CO)_2H]$, $[Ru(pentamethylcylopentadienly)(CO)_2]_2$, $[Ru(indenyl)(CO)_2Cl]$, $[Ru(indenyl)(CO)_2H]$, $[Ru(indenyl)(CO)_2]_2$, Ruthenocen, $[Ru(binap)Cl_2]$, $[Ru(bipyridin)_2Cl_2*2H_2O]$, $[Ru(COD)Cl_2]_2$, [Ru(pentamethylcyclopentadienyl)(COD)Cl], $[Ru_3(CO)_{12}]$, $[Ru(tetraphenylhydroxy\text{-}cyclopentadienyl)(CO)_2H]$, $[Ru(PMe_3)_4(H)_2]$, $[Ru(PEt_3)_4(H)_2]$, $[Ru(PnPr_3)_4(H)_2]$, $[Ru(PnBu_3)_4(H)_2]$, $[Ru(PnOctyl_3)_4(H)_2]$, $[IrCl_3*H_2O]$, $KIrCl_4$, $K_3IrCl_6$, $[Ir(COD)Cl]_2$, $[Ir(cycloocten)_2Cl]_2$, $[Ir(ethen)_2Cl]_2$, $[Ir(cyclopentadienyl)Cl_2]_2$, $[Ir(pentamethylcyclopentadienyl)Cl_2]_2$, $[Ir(cylopentadienyl)(CO)_2]$, $[Ir(pentamethylcyclopentadienyl)(CO)_2]$, $[Ir(PPh_3)_2(CO)(H)]$, $[Ir(PPh_3)_2(CO)(Cl)]$, $[Ir(PPh_3)_3(Cl)]$ unter Zugabe der entsprechenden Liganden, bevorzugt der oben genannten ein- oder mehrzähnigen Phosphinliganden, erst unter den Reaktionsbedingungen erzeugt werden.

Die Menge der Metallkomponente des Katalysators, bevorzugt Ruthenium oder Iridium, beträgt im Allgemeinen 0,1 bis 5000 Gewichts-ppm, jeweils bezogen auf das gesamte flüssige Reaktionsgemisch.

Das erfindungsgemäße Verfahren kann sowohl in einem Lösungsmittel als auch ohne Lösungsmittel ausgeführt werden.

Wird die Reaktion ohne Lösungsmittel durchgeführt, so ist der homogene Katalysator nach der Reaktion im Produkt gelöst. Dieser kann im Produkt verbleiben oder durch eine geeignete Methode aus diesem abgetrennt werden. Möglichkeiten zur Abtrennung des Katalysators sind zum Beispiel das Auswaschen mit einem nicht mit dem Produkt

mischbaren Lösungsmittel, in welchem sich der Katalysator durch geeignete Wahl der Liganden besser löst als im Produkt. Gegebenenfalls wird der Katalysator durch mehrstufige Extraktion aus dem Produkt abgereichert (Alkohol-Aminierung). Als Extraktionsmittel wird bevorzugt ein auch für die Zielreaktion geeignetes Lösungsmittel wie Toluol, Benzol, Xylole, Alkane, wie Hexane, Heptane und Oktane, und acyclische oder cyclische Ether, wie Diethylether und Tetrahydrofuran eingesetzt, welches nach dem Einengen zusammen mit dem extrahierten Katalysator wieder für die Umsetzung eingesetzt werden kann. Möglich ist auch die Entfernung des Katalysators mit einem geeigneten Absorbermaterial. Eine Abtrennung kann auch durch Zufügen von Wasser zu der Produktphase erfolgen, falls die Reaktion in einem mit Wasser nicht mischbaren Lösungsmittel durchgeführt wird. Löst sich der Katalysator dabei bevorzugt in dem Lösungsmittel, kann er mit dem Lösungsmittel von der wässrigen Produktphase abgetrennt und gegebenenfalls erneut eingesetzt werden. Dies kann durch Wahl geeigneter Liganden bewirkt werden. Die resultierenden wässrigen Polyalkylenpolyamine können direkt als technische Polyalkylenpolyaminlösungen eingesetzt werden.

Wird die Reaktion in einem Lösemittels durchgeführt, so kann dieses mit dem Produkt mischbar sein und nach der Reaktion durch Destillation abgetrennt werden. Es können auch Lösungsmittel eingesetzt werden, welche eine Mischungslücke mit dem Produkten oder den Edukten aufweisen. Als geeignete Lösungsmittel hierfür seien beispielsweise Toluol, Benzol, Xylole, Alkane, wie Hexane, Heptane und Oktane, und acyclische oder cyclische Ether, wie Diethylether, Tetrahydrofuran und Dioxan genannt. Durch geeignete Wahl der Phosphinliganden löst sich der Katalysator bevorzugt in der Lösungsmittelphase.

Das Lösungsmittel kann auch unter den Reaktionsbedingungen mit den Edukten und dem Produkt mischbar sein und erst nach dem Abkühlen eine zweite flüssige Phase ausbilden, welche den Großteil des Katalysators enthält. Als Lösungsmittel, die diese Eigenschaft zeigen, seien beispielsweise Toluol, Benzol, Xylole, Alkane, wie Hexane, Heptane und Oktane, genannt. Der Katalysator kann dann zusammen mit dem Lösungsmittel abgetrennt und wieder verwendet werden. Die Produktphase kann auch in dieser Variante mit Wasser versetzt werden. Der in dem Produkt enthaltene Teil des Katalysators kann anschließend durch geeignete Absorbermaterialien wie beispielsweise Polyacrylsäure und deren Salze, sulfonierte Polystyrole und deren Salze, Aktivkohlen, Montmorillonite, Bentonite sowie Zeolithe abgetrennt werden oder aber in dem Produkt belassen werden.

Bei der Ausführungsform der zweiphasigen Reaktionsführung eignen sich als unpolare Lösungsmittel besonders Toluol, Benzol, Xylole, Alkane, wie Hexane, Heptane und Oktane, in Kombination mit lipophilen Phosphinliganden am Übergangsmetallkatalysator wie Triphenylphosphin, Tritolylphosphin, Tri-n-butylphosphin, Tri-n-octylphosphin, Trimethylphosphin, Triethylphosphin, Bis(diphenylphosphino)methan 1,2-Bis(diphenylphosphino)ethan, 1,2-Dimethyl-1,2-bis(diphenylphosphino)ethan, 1,2-Bis(dicyclohexylphosphino)ethan, 1,2-Bis(diethylphosphino)ethan, 1,3-Bis(diphenylphosphino)propan, 1,4-Bis(diphenylphosphino)butan, 1,5-Bis(diphenylphosphino)propan und 1,1,1-Tris(diphenylphosphinomethyl)ethan, wodurch sich der Übergangsmetallkatalysator in der unpolaren Phase anreichert. Bei dieser Ausführungsform, in welcher das Produkt sowie das Reaktionswasser und ggf. nicht umgesetzte Edukte eine mit diesen Verbindungen angereicherte Zweitphase bilden, kann der Großteil des Katalysators durch einfache Phasentrennung von der Produktphase abgetrennt und wiederverwendet werden.

Falls flüchtige Nebenprodukte oder nicht umgesetzte Edukte oder auch das bei der Reaktion entstandene oder nach der Reaktion zur besseren Extraktion zugesetzte Wasser unerwünscht sind, können diese problemlos von dem Produkt durch Destillation abgetrennt werden.

Die Reaktion erfolgt in der Flüssigphase bei einer Temperatur von im Allgemeinen 20 bis 250 °C. Bevorzugt beträgt die Temperatur mindestens 100 °C und bevorzugt höchstens 200 °C. Die Reaktion kann bei einem Gesamtdruck von 0.1 bis 20 MPa absolut, der sowohl der Eigendruck des Lösungsmittels bei der Reaktionstemperatur als auch der Druck eines Gases wie Stickstoff, Argon oder Wasserstoff sein kann, durchgeführt werden. Die mittlere Reaktionszeit beträgt im Allgemeinen 15 Minuten bis 100 Stunden.

Es kann auch vorteilhaft sein, das bei der Reaktion gebildete Wasser kontinuierlich aus dem Reaktionsgemisch zu entfernen. Das Reaktionswasser kann direkt durch Destillation aus dem Reaktionsgemisch oder als Azeotrop unter Zusatz eines geeigneten Lösungsmittels (Schleppers) und unter Verwendung eines Wasserabscheiders abgetrennt, oder durch Zusatz von Wasser entziehenden Hilfsstoffen entfernt werden.

Der Zusatz von Basen kann einen positiven Effekt auf die Produktbildung haben. Als geeignete Basen seien hier Alkalihydroxide, Erdalkalihydroxide, Alkalialkoholate, Erdalkalialkoholate, Alkalimetallcarbonate und Erdalkalimetallcarbonate genannt, von welchen 0,01 bis 100 Äquivalente in Bezug auf den verwendeten Metallkatalysator eingesetzt werden können.

Die Erfindung betrifft auch die Verwendung der Polyalkylenpolyamine a) als Haftvermittler für Druckfarben, b) als Hilfsmittel (Adhäsion) zur Herstellung von Komposit-Folien, c) als Kohäsionspromotor für Klebstoffe, d) als Vernetzer/Härter für Harze, e) als Primer in Lacken, f) als Nasshaftungspromotor in Dispersionsfarben, g) als Komplexierungsmittel und Flockungsmittel, h) als Penetrationshilfsmittel im Holzschutz, i) als Korrosionsinhibitor j) als Immobilisierungsmittel von Proteinen und Enzymen.

Die Erfindung wird durch die nachstehenden Ausführungsbeispiele näher erläutert.

## Beispiele

Beispiel 1

In einem geschüttelten Stahlautoklav mit einem 40 mL-Glaseinsatz werden unter Inertbedingungen 0,19 g (0,2 mmol) $[Ru(PPh_3)_3(H)_2(CO)]$, 0,07 g (0,64 mmol) KO*t*Bu, 0,45 g (2,2 mmol) P*n*$Bu_3$, 2,0 g (32,7 mmol) Ethanolamin und 18 mL Toluol eingewogen. Der Reaktor wird dann unter 25 bar Argondruck auf 140°C aufgeheizt und bei dieser Temperatur und 30 bar Argondruck für 20 h mit 700 U/min geschüttelt. Nach vollendeter Reaktion und Abkühlen bilden sich zwei Phasen aus, wobei es sich bei der unteren der beiden Phasen um die Produktphase handelt. In der Unterphase lassen sich geringe Mengen an Dimeren (Diethanolamin), Trimeren (Triethanolamin, 1-Piperazinethanol, Triethylentetramin) und Tetrameren (Tetraethylenpentamin) finden, welche durch Gaschromatographie bestimmt werden. Der Rest der Produktphase besteht aus nicht-GC-gängigen höheren Oligomeren und Polymeren des Ethanolamins. Das mittlere Molekulargewicht der Polymere wird per Gelpermeationschromatographie nach der Methode der Größenausschlusschromatographie bestimmt. Als Elutionsmittel wird Hexafluorisopropanol mit 0,05 % Trifluoressigsäure-Kaliumsalz verwendet. Die Messung wird bei 30°C mit einer Durchflußgeschwindigkeit von 1 mL/min und 10 μL Probelösung auf einer Polyestercopolymer-Säule (8 mm * 30 cm) mit einem Differentialkalorimeter bzw. UV-Photometer als Detektor durchgeführt. Das Gewichtsmittel des erhaltenen Polymers liegt bei 1580 g/mol mit einer Dispersität (Mw/Mn) von 2,5. Dies entspricht einer mittleren Kettenlänge n (Zahl der Ethylenimin-Einheiten) des Polymers $-(CH_2CH_2NH)_n-$ von 37.

Beispiel 2

In einem geschüttelten Stahlautoklav mit einem 40 mL-Glaseinsatz werden unter Inertbedingungen 0,19 g (0,2 mmol) $[Ru(PPh_3)_3(H)_2(CO)]$, 0,07 g (0,64 mmol) KO*t*Bu, 0,09 g (0,452 mmol) P*n*$Bu_3$, 2,0 g (32,7 mmol) Ethanolamin und 18 mL Toluol eingewogen. Der Reaktor wird dann unter 25 bar Argondruck auf 140°C aufgeheizt und bei dieser Temperatur und 30 bar Argondruck für 20 h mit 700 U/min geschüttelt. Nach vollendeter Reaktion und Abkühlen bilden sich zwei Phasen aus, wobei es sich bei der unteren der beiden Phasen um die Produktphase handelt. In der Unterphase lassen sich geringe Mengen an Dimeren (Diethanolamin), Trimeren (Triethanolamin, 1-Piperazinethanol, Triethylentetramin) und Tetrameren (Tetraethylenpentamin) finden, welche durch Gaschromatographie bestimmt werden. Der Rest der Produktphase besteht aus nicht-GC-gängigen höheren Oligomeren und Polymeren des Ethanolamins. Das mittlere Molekulargewicht der Polymere wird wie in Beispiel 1 beschrieben per Gelpermeationschromatographie nach der Methode der Größenausschlusschromatographie bestimmt. Das Gewichtsmittel des erhaltenen Polymers liegt bei 1070 g/mol mit einer Dispersität (Mw/Mn) von 2,0. Dies entspricht einer mittleren Kettenlänge n des Polymers $-(CH_2CH_2NH)_n-$ von 25.

Beispiel 3

In einem geschüttelten Stahlautoklav mit einem 40 mL-Glaseinsatz werden unter Inertbedingungen 0,19 g (0,2 mmol) $[Ru(PPh_3)_3(H)_2(CO)]$, 0,07 g (0,64 mmol) KO*t*Bu, 2,0 g (32,7 mmol) Ethanolamin und 18 mL Toluol eingewogen. Der Reaktor wird dann unter 25 bar Wasserstoffdruck auf 140°C aufgeheizt und bei dieser Temperatur und 30 bar Wasserstoffdruck für 20 h mit 700 U/min geschüttelt. Nach vollendeter Reaktion und Abkühlen bilden sich zwei Phasen aus, wobei es sich bei der unteren der beiden Phasen um die Produktphase handelt (1,66 g Ausbeute). 0,2 g der Produktphase wurden für die Analytik (GC und GPC) in 0,25 g Wasser und 0,8 g Dimethylacetamid aufgenommen. In der Unterphase lassen sich geringe Mengen an Dimeren (Diethanolamin), Trimeren (Triethanolamin, 1-Piperazinethanol, Triethylentetramin) und Tetrameren (Tetraethylenpentamin) finden, welche durch Gaschromatographie bestimmt werden. Der Rest der Produktphase besteht aus nicht-GC-gängigen höheren Oligomeren und Polymeren des Ethanolamins. Das mittlere Molekulargewicht der Polymere wird wie in Beispiel 1 beschrieben bestimmt. Das Gewichtsmittel des erhaltenen Polymers liegt bei 1660 g/mol mit einer Dispersität (Mw/Mn) von 2,6. Dies entspricht einer mittleren Kettenlänge n des Polymers $-(CH_2CH_2NH)_n-$ von 39.

Beispiel 4

In einem geschüttelten Stahlautoklav mit einem 40 mL-Glaseinsatz werden unter Inertbedingungen 0,19 g (0,2 mmol) $[Ru(PPh_3)_3(H)_2(CO)]$, 0,07 g (0,64 mmol) KO*t*Bu, 0,09 g (0,452 mmol) P*n*$Bu_3$, 2.0 g (32.7 mmol) Ethanolamin und 18 mL Toluol eingewogen. Der Reaktor wird dann unter 25 bar Wasserstoffdruck auf 140°C aufgeheizt und bei dieser Temperatur und 30 bar Wasserstoffdruck für 20 h mit 700 U/min geschüttelt. Nach vollendeter Reaktion und Abkühlen bilden sich zwei Phasen aus, wobei es sich bei der unteren der beiden Phasen um die Produktphase handelt (1,72 g Ausbeute). 0,2 g der Produktphase werden für die Analytik (GC und GPC) in 0,25 g Wasser und 0,8 g Dimethylacetamid aufgenommen. In der Unterphase lassen sich geringe Mengen an Dimeren (Diethanolamin), Trimeren

(Triethanolamin, 1-Piperazinethanol, Triethylentetramin) und Tetrameren (Tetraethylenpentamin) finden, welche durch Gaschromatographie bestimmt werden. Der Rest der Produktphase besteht aus nicht-GC-gängigen höheren Oligomeren und Poylmeren des Ethanolamins. Das mittlere Molekulargewicht der Polymere wird wie in Beispiel 1 beschrieben bestimmt. Das Gewichtsmittel des erhaltenen Polymers liegt bei 1120 g/mol mit einer Dispersität (Mw/Mn) von 1,7. Dies entspricht einer mittleren Kettenlänge n des Polymers $-(CH_2CH_2NH)_n-$ von 26.

Beispiel 5

In einem 250 mL Hastelloy-C-Autoklav mit Blattrührer werden unter Inertbedingungen 0,73 g (1,1 mmol) $[Ir(COD)Cl]_2$, 1,3 g (3,2 mmol) Bis(diphenylphosphino)ethan, 20 g (61,1 mmol) Ethanolamin und 61 g Toluol eingewogen. Das Reaktionsgemisch wird im verschlossenen Autoklaven bei 150°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt (19 g Ausbeute). 1,0 g der Produktphase wurden für die Analytik (GC und GPC) in 1 g Wasser und 4 g Dimethylacetamid aufgenommen. In der Unterphase lassen sich geringe Mengen an Trimeren (Triethylentetramin, 1-Piperazinethanol) und Tetrameren (Tetraethylenpentamin, Piperazin-1,4-diethanol) finden, welche durch Gaschromatographie bestimmt wurden. Der Rest der Produktphase besteht aus nicht-GC-gängigen höheren Oligomeren und Poylmeren des Ethanolamins. Das mittlere Molekulargewicht der Polymere wird wie in Beispiel 1 beschrieben bestimmt. Das Gewichtsmittel des erhaltenen Polymers liegt bei 1880 g/mol mit einer Dispersität (Mw/Mn) von 2,7. Dies entspricht einer mittleren Kettenlänge n des Polymers $-(CH_2CH_2NH)_n-$ von 44.

Beispiel 6

In einem geschüttelten Stahlautoklav mit einem 13 mL-Glaseinsatz werden unter Inertbedingungen 22 mg (0,033 mmol) $[Ir(COD)Cl]_2$, 39,8 mg (0,1 mmol) Bis(diphenylphosphino)ethan, 600 mg (9,81 mmol) Ethanolamin und 3 g THF eingewogen. Der Reaktor wird dann unter 45 bar Argondruck auf 150°C aufgeheizt und bei dieser Temperatur und 50 bar Argondruck für 20 h mit 700 U/min geschüttelt. Nach der Reaktion bildet sich eine Phase aus, welche ohne weitere Aufarbeitung analysiert wurde. Es lassen sich geringe Mengen an Dimeren (Diethanolamin), Trimeren (Triethanolamin, 1-Piperazinethanol, Triethylentetramin) und Tetrameren (Tetraethylenpentamin) finden, welche durch Gaschromatographie bestimmt wurden. Der Rest der Produktphase besteht aus nicht-GC-gängigen höheren Oligomeren und Polymeren des Ethanolamins. Das mittlere Molekulargewicht der Polymere wird wie in Beispiel 1 beschrieben bestimmt. Das Gewichtsmittel des erhaltenen Polymers liegt bei 3210 g/mol mit einer Dispersität (Mw/Mn) von 1,7. Dies entspricht einer mittleren Kettenlänge n des Polymers $-(CH_2CH_2NH)_n-$ von 70.

Beispiel 7

In einem geschüttelten Stahlautoklav mit einem 13 mL-Glaseinsatz werden unter Inertbedingungen 31,5 mg (0,033 mmol) $[Ru(1,2\text{-Dimethyl-}1,2\text{-Bis(diphenylphosphino)ethan})_2(H)_2]$, 305,4 mg (4,9 mmol) Ethylendiamin, 295,7 mg (4,9 mmol) Ethylenglykol und 3 g THF eingewogen. Der Reaktor wird dann unter 45 bar Argondruck auf 150°C aufgeheizt und bei dieser Temperatur und 50 bar Argondruck für 20 h mit 700 U/min geschüttelt. Nach der Reaktion bildet sich eine Phase aus, welche ohne weitere Aufarbeitung analysiert wurde. Es lassen sich geringe Mengen an Dimeren (Diethanolamin), Trimeren (Triethanolamin, 1-Piperazinethanol, Triethylentetramin) und Tetrameren (Tetraethylenpentamin) finden, welche durch Gaschromatographie bestimmt wurden. Der Rest der Produktphase besteht aus nicht-GC-gängigen höheren Oligomeren und Polymeren des Ethanolamins. Das mittlere Molekulargewicht der Polymere wird wie in Beispiel 1 beschrieben bestimmt. Das Gewichtsmittel des erhaltenen Polymers liegt bei 1710 g/mol mit einer Dispersität (Mw/Mn) von 2,1. Dies entspricht einer mittleren Kettenlänge n des Polymers $-(CH_2CH_2NH)_n-$ von 40.

Beispiel 8

In einem geschüttelten Stahlautoklav mit einem 13 mL-Glaseinsatz werden unter Inertbedingungen 30,3 mg (0,033 mmol) $[Ru(PPh_3)_3(CO)(H)_2]$, 305,4 mg (4,9 mmol) Ethylendiamin, 295,7 mg (4,9 mmol) Ethylenglykol und 3 g Toluol eingewogen. Der Reaktor wird dann unter 45 bar Argondruck auf 150°C aufgeheizt und bei dieser Temperatur und 50 bar Argondruck für 20 h mit 700 U/min geschüttelt. Nach der Reaktion bilden sich zwei Phasen aus, wobei es sich bei der Unterphase um das Produkt handelt, welches abgetrennt und ohne weitere Aufarbeitung analysiert wird. In der Unterphase lassen sich geringe Mengen an Dimeren (Diethanolamin), Trimeren (Triethanolamin, 1-Piperazinethanol, Triethylentetramin) und Tetrameren (Tetraethylenpentamin) finden, welche durch Gaschromatographie bestimmt werden. Der Rest der Produktphase besteht aus nicht-GC-gängigen höheren Oligomeren und Polymeren des Ethanolamins. Das mittlere Molekulargewicht der Polymere wird wie in Beispiel 1 beschrieben bestimmt. Das Gewichtsmittel des erhaltenen Polymers liegt bei 2080 g/mol mit einer Dispersität (Mw/Mn) von 2,3. Dies entspricht einer mittleren Ketten-

länge n des Polymers $-(CH_2CH_2NH)_n-$ von 48.

Beispiel 9

In einem 300 mL-Glasdruckreaktor mit Gaseintragsrührer werden unter Inertbedingungen 0,37 g (0,55 mmol) $[Ir(COD)Cl]_2$, 0,6 g (0,96 mmol) 2-Tris(diphenylphosphinomethyl)ethan, 0,06 g (0,55 mmol) Kalium-tert.-butylat, 6,1 g (52,0 mmol) 1,6-Hexamethylendiamin, 4,0 g (52,0 mmol) 1,3-Propandiol und 90 ml Xylol eingefüllt. Das Reaktionsgemisch wird im verschlossenen Autoklaven bei 160°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser gegeben und 5 Minuten gerührt, wobei man 15,3 g als Lösung des Produktes in Wasser als Unterphase erhält. Das mittlere Molekulargewicht der Oligomere wird wie in Beispiel 1 beschrieben bestimmt. Das Gewichtsmittel (RI) des erhaltenen Oligomers liegt bei 1820 g/mol mit einer Dispersität (Mw/Mn) von 2,0. Dies entspricht einer mittleren Kettenlänge n des Oligomers $-(CH_2CH_2CH_2CH_2CH_2CH_2NHCH_2CH_2CH_2)_n-$ von 12. Nach der Reaktion finden sich 89 % des eingesetzten Iridiums in der Xylolphase (durch Ermittlung des Iridiumgehaltes der Ober- und Unterphase durch Atomadsorptionsspektroskopie bestimmt).

Beispiel 10

In einem 300 mL-Glasdruckreaktor mit Gaseintragsrührer werden unter Inertbedingungen 0,23 g (0,25 mmol) $[Ru(PPh_3)_3(CO)(H)_2]$, 0,3 g (0,78 mmol) 1,2-Bis(diphenylphosphino)ethan, 0,31 g (0,78 mmol) Kalium-tert.-butylat, 15,0 g (129 mmol) 1,6-Hexamethylendiamin, 9,8 g (129 mmol) 1,3-Propandiol und 80 ml Toluol eingefüllt. Das Reaktionsgemisch wird im verschlossenen Autoklaven bei 150°C unter dem Eigendruck des Lösungsmittels für 24 h gerührt. Nach vollendeter Reaktion und Abkühlen bilden sich zwei Phasen aus, wobei es sich bei der unteren der beiden Phasen um die Produktphase handelt. Zum Reaktionsgemisch werden 20 mL Wasser gegeben und 5 Minuten gerührt, wobei man 39,3 g Lösung des Produktes in Wasser als Unterphase erhält. Das mittlere Molekulargewicht der Oligomere wird wie in Beispiel 1 beschrieben bestimmt. Das Gewichtsmittel (RI) des erhaltenen Oligomers liegt bei 1790 g/mol mit einer Dispersität (Mw/Mn) von 2,0. Dies entspricht einer mittleren Kettenlänge n des Oligomers $-(CH_2CH_2CH_2CH_2CH_2CH_2NHCH_2CH_2CH_2)_n-$ von 12.

Beispiel 11

In einem 300 mL-Glasdruckreaktor mit Gaseintragsrührer werden unter Inertbedingungen 0,79 g (0,86 mmol) $[Ru(PPh_3)_3(CO)(H)_2]$, 0,7 g (3,4 mmol) Tri-n-butylphosphan, 0,7 g (3,4 mmol) Kalium-tert.-butylat, 15,0 g (143 mmol) Diethanolamin und 75 ml Toluol eingefüllt. Das Reaktionsgemisch wird im verschlossenen Autoklaven bei 150°C unter dem Eigendruck des Lösungsmittels für 24 h gerührt. Nach vollendeter Reaktion und Abkühlen bilden sich zwei Phasen aus, wobei es sich bei der unteren der beiden Phasen um die Produktphase handelt. Zum Reaktionsgemisch werden 20 mL Wasser gegeben und 5 Minuten gerührt, wobei man 15,9 g als Lösung des Produktes in Wasser als Unterphase erhält. Das mittlere Molekulargewicht der Polymere wird wie in Beispiel 1 beschrieben bestimmt. Das Gewichtsmittel (RI) des erhaltenen Polymers liegt bei 2820 g/mol mit einer Dispersität (Mw/Mn) von 4,2. Dies entspricht einer mittleren Kettenlänge n des Polymers $((CH_2CH_2)_2N)_n$ von 40. Nach der Reaktion finden sich 97 % des eingesetzten Rutheniums in der Toluolphase, bestimmt durch Ermittlung des Rutheniumgehaltes der Ober- und Unterphase durch Atomadsorptionsspektroskopie.

Beispiel 12

In einem 250 mL Hastelloy C-Autoklav mit Blattrührer werden unter Inertbedingungen 0,73 g (0,11 mmol) $[Ir(COD)Cl]_2$, 1,29 g (0,32 mmol) 1,2-Bis(diphenylphosphino)ethan, 10,0 g (164 mmol) Ethanolamin und 70 ml Toluol eingefüllt. Das Reaktionsgemisch wird im verschlossenen Autoklaven bei 150 °C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser und 6 ml N,N-Dimthylacetamid gegeben und 5 Minuten gerührt, wobei man 18,8 g Unterphase als Lösung des Produktes in Wasser/N,N-Diemthylacetamid erhält. Das mittlere Molekulargewicht der Polymere wird wie in Beispiel 1 beschrieben bestimmt. Das Gewichtsmittel (RI) des erhaltenen Polymers liegt bei 1410 g/mol mit einer Dispersität (Mw/Mn) von 7,7. Dies entspricht einer mittleren Kettenlänge n des Polymers $(CH_2CH_2NH)_n$ von 33.

Beispiel 13

In einem 250 mL Hastelloy C-Autoklav mit Blattrührer werden unter Inertbedingungen 0,73 g (0,11 mmol) $[Ir(COD)Cl]_2$, 1,37 g (0,32 mmol) 1,2-Bis(dicylohexylphosphino)ethan, 10,0 g (164 mmol) Ethanolamin und 70 ml Toluol eingefüllt. Das Reaktionsgemisch wird im verschlossenen Autoklaven bei 160°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 13 mL Wasser gegeben und 5 Minuten gerührt, wobei man 17,3 g Unterphase als Lösung des Produktes in Wasser erhält. Das mittlere Molekulargewicht der Polymere wird wie in Beispiel 1 beschrieben bestimmt. Das Gewichtsmittel (RI) des erhaltenen Polymers liegt bei 5460 g/mol mit einer Dispersität (Mw/Mn) von 7,9. Dies entspricht einer mittleren Kettenlänge n des Polymers $(CH_2CH_2NH)_n$ von 127. Nach der Reaktion finden sich 80 % des eingesetzten Iridiums in der Toluolphase, bestimmt durch Ermittlung des Iridiumgehaltes der Ober- und Unterphase durch Atomadsorptionsspektroskopie.

Beispiel 14

In einem 250 mL Hastelloy C-Autoklav mit Blattrührer werden unter Inertbedingungen 0,25 g (0,27 mmol) $[Ru(P\textit{n}Bu_3)_4(H)_2]$, 0,3 g (1,5 mmol) Tri-n-butylphosphan, 10,0 g (164 mmol) Ethanolamin und 60 g Toluol eingewogen. Das Reaktionsgemisch wird im verschlossenen Autoklaven bei 160°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser gegeben und 5 Minuten gerührt, wobei man eine Lösung des Produktes in Wasser erhält. Das mittlere Molekulargewicht der Polymere wird wie in Beispiel 1 beschrieben bestimmt. Das Gewichtsmittel (RI) des erhaltenen Polymers liegt bei 2000 g/mol mit einer Dispersität (Mw/Mn) von 4,7. Dies entspricht einer mittleren Kettenlänge n des Polymers $(CH_2CH_2NH)_n$ von 47.

Beispiel 15

In einem 250 mL Hastelloy C-Autoklav mit Blattrührer werden unter Inertbedingungen 0,43 g (0,27 mmol) $[Ru(P\textit{n}Octyl_3)_4(H)_2]$, 0.6 g (1.6 mmol) Tri-n-octylphosphan, 10,0 g (164 mmol) Ethanolamin, 0,1 g (0,9 mmol) Kalium-tert-butylat und 60 g Toluol eingewogen. Das Reaktionsgemisch wird im verschlossenen Autoklaven bei 160°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser gegeben und 5 Minuten gerührt, wobei man eine Lösung (18,5 g) des Produktes in Wasser erhält. Nach der Reaktion und Wasserzugabe finden sich 89,9 % des eingesetzten Rutheniums in der Toluolphase, bestimmt durch Ermittlung des Rutheniumgehaltes der Ober- und Unterphase durch Atomadsorptionsspektroskopie. Die Unterphase wird abgetrennt und das Wasser sowie nicht umgesetztes Edukt und flüchtige Bestandteile am Rotationsverdampfer bei 20 mbar und 100°C entfernt, wobei 5,0 g (71,8 % Ausbeute) des reinen Produktes erhalten wurden. Das mittlere Molekulargewicht der Oligomere wird wie in Beispiel 1 beschrieben bestimmt. Das Gewichtsmittel (RI) des erhaltenen Oligomers liegt bei 427 g/mol mit einer Dispersität (Mw/Mn) von 1,1. Dies entspricht einer mittleren Kettenlänge n des Oligomers $(CH_2CH_2NH)_n$ von 10.

Beispiel 16

In einem 250 mL Hastelloy C-Autoklav mit Blattrührer werden unter Inertbedingungen 0,43 g (0,27 mmol) $[Ru(P\textit{n}Octyl_3)_4(H)_2]$, 0,6 g (1,6 mmol) Tri-n-octylphosphan, 10,0 g (164 mmol) Ethanolamin und 60 g Toluol eingewogen. Das Reaktionsgemisch wird im verschlossenen Autoklaven bei 160°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser gegeben und 5 Minuten gerührt, wobei man eine Lösung (19,0 g) des Produktes in Wasser erhält. Nach der Reaktion und Wasserzugabe finden sich 83,0 % des eingesetzten Rutheniums in der Toluolphase, bestimmt durch Ermittlung des Rutheniumgehaltes der Ober- und Unterphase durch Atomadsorptionsspektroskopie. Die Unterphase wird abgetrennt und das Wasser sowie nicht umgesetztes Edukt und flüchtige Bestandteile am Rotationsverdampfer bei 20 mbar und 100°C entfernt, wobei 6,4 g (90,6 % Ausbeute) des reinen Produktes erhalten werden. Das mittlere Molekulargewicht der Oligomere wird wie in Beispiel 1 beschrieben bestimmt. Das Gewichtsmittel (RI) des erhaltenen Oligomers liegt bei 442 g/mol mit einer Dispersität (Mw/Mn) von 1,2. Dies entspricht einer mittleren Kettenlänge n des Oligomers $(CH_2CH_2NH)_n$ von 10.

Beispiel 17

In einem 250 mL Hastelloy C-Autoklav mit Blattrührer werden unter Inertbedingungen 0,25 g (0,27 mmol)

$[Ru(PnButyl)_4(H)_2]$, 0,3 g (1,5 mmol) Tri-n-butylphosphan, 10,0 g (164 mmol) Ethanolamin, 0,1 g (0,9 mmol) Kalium-tert.-butylat und 60 g Toluol eingewogen. Das Reaktionsgemisch wird im verschlossenen Autoklaven bei 160°C unter dem Eigendruck des Lösungsmittels für 10 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser gegeben und 5 Minuten gerührt, wobei man eine Lösung (18,0 g) des Produktes in Wasser erhält. Die Unterphase wird abgetrennt und das Wasser sowie nicht umgesetztes Edukt und flüchtige Bestandteile am Rotationsverdampfer bei 20 mbar und 100°C entfernt, wobei 6,0 g (85,0 % Ausbeute) des reinen Produktes erhalten werden. Das mittlere Molekulargewicht der Oligomere wird wie in Beispiel 1 beschrieben bestimmt. Das Gewichtsmittel (RI) des erhaltenen Oligomers liegt bei 424 g/mol mit einer Dispersität (Mw/Mn) von 1,1. Dies entspricht einer mittleren Kettenlänge n des Oligomers $(CH_2CH_2NH)_n$ von 10.

Beispiel 18

In einem 250 mL Hastelloy C-Autoklav mit Blattrührer werden unter Inertbedingungen 0,25 g (0,27 mmol) $[Ru(P\textit{n}Butyl_3)_4(H)_2]$, 0,3 g (1,5 mmol) Tri-n-butylphosphan, 10,0 g (133 mmol) 3-Amino-1-propanol, 0,1 g (0,9 mmol) Kalium-tert.-butylat und 60 g Toluol eingewogen. Das Reaktionsgemisch wird im verschlossenen Autoklaven bei 160°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser gegeben und 5 Minuten gerührt, wobei man eine Lösung (15,7 g) des Produktes in Wasser erhält. Nach der Reaktion und Wasserzugabe finden sich 94,9 % des eingesetzten Rutheniums in der Toluolphase, bestimmt durch Ermittlung des Rutheniumgehaltes der Ober- und Unterphase durch Atomadsorptionsspektroskopie. Die Unterphase wird abgetrennt und das Wasser sowie nicht umgesetztes Edukt und flüchtige Bestandteile am Rotationsverdampfer bei 20 mbar und 100°C entfernt, wobei 4,1 g (54,0 % Ausbeute) des reinen Produktes erhalten werden. Das mittlere Molekulargewicht der Oligomere wird wie in Beispiel 1 beschrieben bestimmt. Das Gewichtsmittel (RI) des erhaltenen Oligomers liegt bei 411 g/mol mit einer Dispersität (Mw/Mn) von 1,1. Dies entspricht einer mittleren Kettenlänge n des Oligomers $(CH_2CH_2CH_2NH)_n$ von 7.

Beispiel 19

In einem 250 mL Hastelloy C-Autoklav mit Blattrührer werden unter Inertbedingungen 0,25 g (0,27 mmol) $[Ru(P\textit{n}Butyl_3)_4(H)_2]$, 0,3 g (1,5 mmol) Tri-n-butylphosphan, 10,0 g (133 mmol) N-Methylethanolamin, 0,1 g (0,9 mmol) Kalium-tert.-butylat und 60 g Toluol eingewogen. Das Reaktionsgemisch wird im verschlossenen Autoklaven bei 160°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser gegeben und 5 Minuten gerührt, wobei man eine Lösung (17,3 g) des Produktes in Wasser erhält. Nach der Reaktion und Wasserzugabe finden sich 98,8 % des eingesetzten Rutheniums in der Toluolphase, bestimmt durch Ermittlung des Rutheniumgehaltes der Ober- und Unterphase durch Atomadsorptionsspektroskopie. Die Unterphase wird abgetrennt und das Wasser sowie nicht umgesetztes Edukt und flüchtige Bestandteile am Rotationsverdampfer bei 20 mbar und 100°C entfernt, wobei 4,7 g (61,9 % Ausbeute) des reinen Produktes erhalten werden. Das mittlere Molekulargewicht der Oligomere wird wie in Beispiel 1 beschrieben bestimmt. Das Gewichtsmittel (RI) des erhaltenen Oligomers liegt bei 312 g/mol mit einer Dispersität (Mw/Mn) von 1,1. Dies entspricht einer mittleren Kettenlänge n des Oligomers $(CH_2CH_2NCH_3)_n$ von 6.

Beispiel 20

In einem 250 mL Hastelloy C-Autoklav mit Blattrührer werden unter Inertbedingungen 0,25 g (0,27 mmol) $[Ru(P\textit{n}Butyl_3)_4(H)_2]$, 0,3 g (1,5 mmol) Tri-n-butylphosphan, 10,0 g (133 mmol) Isopropanolamin, 0,1 g (0,9 mmol) Kalium-tert.-butylat und 60 g Toluol eingewogen. Das Reaktionsgemisch wird im verschlossenen Autoklaven bei 160°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser gegeben und 5 Minuten gerührt, wobei man eine Lösung (17,1 g) des Produktes in Wasser erhält. Nach der Reaktion und Wasserzugabe finden sich 98,0 % des eingesetzten Rutheniums in der Toluolphase, bestimmt durch Ermittlung des Rutheniumgehaltes der Ober- und Unterphase durch Atomadsorptionsspektroskopie. Die Unterphase wird abgetrennt und das Wasser sowie nicht umgesetztes Edukt und flüchtige Bestandteile am Rotationsverdampfer bei 20 mbar und 100°C entfernt, wobei 3,4 g (44,8 % Ausbeute) des reinen Produktes erhalten werden. Bei dem Produkt handelt es sich um eine komplexes Oligomerengemisch, wie durch $^{13}C$-Spektroskopie ermittelt wurde.

Beispiel 21

In einem 250 mL Hastelloy C-Autoklav mit Blattrührer werden unter Inertbedingungen 0,25 g (0,27 mmol) $[Ru(PnButyl_3)_4(H)_2]$, 0,3 g (1,5 mmol) Tri-*n*-butylphosphan, 8,3 g (80 mmol) 1,2-Pentandiol, 4,8 g (80 mmol) Ethylendiamin, 0,1 g (0,9 mmol) Kalium-tert.-butylat und 60 g Toluol eingewogen. Das Reaktionsgemisch wird im verschlossenen Autoklaven bei 160°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser gegeben und 5 Minuten gerührt, wobei man eine Lösung (18,4 g) des Produktes in Wasser erhält. Die Unterphase wird abgetrennt und das Wasser sowie nicht umgesetztes Edukt und flüchtige Bestandteile am Rotationsverdampfer bei 20 mbar und 100°C entfernt, wobei 4,9 g (48,5 % Ausbeute) des reinen Produktes erhalten werden. Das mittlere Molekulargewicht der Oligomere wird wie in Beispiel 1 beschrieben bestimmt. Das Gewichtsmittel (RI) des erhaltenen Oligomers liegt bei 334 g/mol mit einer Dispersität (Mw/Mn) von 1,2. Dies entspricht einer mittleren Kettenlängen des Oligomers $(CH_2CH(CH_2CH_2CH_3)NHCH_2CH_2NH)_n$ von 3.

Beispiel 22

In einem 250 mL Hastelloy C-Autoklav mit Blattrührer werden unter Inertbedingungen 0,25 g (0,27 mmol) $[Ru(PnButyl_3)_4(H)_2]$, 0,3 g (1,5 mmol) Tri-n-butylphosphan, 5,0 g (80 mmol) Ethylenglykol, 8,2 g (80 mmol) Neopentandiamin, 0,1 g (0,9 mmol) Kalium-tert.-butylat und 60 g Toluol eingewogen. Das Reaktionsgemisch wird im verschlossenen Autoklaven bei 160°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser gegeben und 5 Minuten gerührt, wobei man eine Lösung (17,7 g) des Produktes in Wasser erhält. Die Unterphase wird abgetrennt und das Wasser sowie nicht umgesetztes Edukt und flüchtige Bestandteile am Rotationsverdampfer bei 20 mbar und 100°C entfernt, wobei 4,7 g (46,6 % Ausbeute) des reinen Produktes erhalten werden. Das mittlere Molekulargewicht der Oligomere wird wie in Beispiel 1 beschrieben bestimmt. Das Gewichtsmittel (RI) des erhaltenen Oligomers liegt bei 335 g/mol mit einer Dispersität (Mw/Mn) von 1,1. Dies entspricht einer mittleren Kettenlänge n des Polymers $(CH_2C(CH_3)_2CHNHCH_2CH_2NH)_n$ von 3.

Beispiel 23

In einem 250 mL Hastelloy C-Autoklav mit Blattrührer werden unter Inertbedingungen 0,25 g (0,27 mmol) $[Ru(PnButyl_3)_4(H)_2]$, 0,3 g (1,5 mmol) Tri-n-butylphosphan, 5,0 g (80 mmol) Ethylenglykol, 5,9 g (80 mmol) 1,3-Diaminopropan, 0,1 g (0,9 mmol) Kalium-tert.-butylat und 60 g Toluol eingewogen. Das Reaktionsgemisch wird im verschlossenen Autoklaven bei 160°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser gegeben und 5 Minuten gerührt, wobei man eine Lösung (17,9 g) des Produktes in Wasser erhält. Die Unterphase wird abgetrennt und das Wasser sowie nicht umgesetztes Edukt und flüchtige Bestandteile am Rotationsverdampfer bei 20 mbar und 100°C entfernt, wobei 5,7 g (72,6 % Ausbeute) des reinen Produktes erhalten werden. Das mittlere Molekulargewicht der Oligomere wird wie in Beispiel 1 beschrieben bestimmt. Das Gewichtsmittel (RI) des erhaltenen Oligomers liegt bei 334 g/mol mit einer Dispersität (Mw/Mn) von 1,1.

Beispiel 24

In einem 250 mL Hastelloy C-Autoklav mit Blattrührer werden unter Inertbedingungen 0,43 g (0,27 mmol) $[Ru(PnOctyl_3)_4(H)_2]$, 10,0 g (164 mmol) Ethanolamin, 0,1 g (0,9 mmol) Kalium-tert.-butylat und 60 g Toluol eingewogen. Das Reaktionsgemisch wird im verschlossenen Autoklaven bei 160°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser gegeben und 5 Minuten gerührt, wobei man eine Lösung (16,4 g) des Produktes in Wasser erhält. Die Unterphase wird abgetrennt und das Wasser sowie nicht umgesetztes Edukt und flüchtige Bestandteile am Rotationsverdampfer bei 20 mbar und 100°C entfernt, wobei 5,1 g (72,2 % Ausbeute) des reinen Produktes erhalten werden. Das mittlere Molekulargewicht der Oligomere wird wie in Beispiel 1 beschrieben bestimmt. Das Gewichtsmittel (RI) des erhaltenen Oligomers liegt bei 425 g/mol mit einer Dispersität (Mw/Mn) von 1,1. Dies entspricht einer mittleren Kettenlänge n des Oligomers $(CH_2CH_2NH)_n$ von 10.

Beispiel 25

a) In einem 250 mL Hastelloy C-Autoklav mit Blattrührer werden unter Inertbedingungen 0,43 g (0,27 mmol) $[Ru(PnOctyl_3)_4(H)_2]$, 10,0 g (164 mmol) Ethanolamin und 60 g Toluol eingewogen. Das Reaktionsgemisch wird im verschlossenen Autoklaven bei 160°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser gegeben und 5 Minuten gerührt, wobei man eine Lösung (17,9 g) des Produktes in Wasser erhält. Nach der Reaktion und Wasserzugabe finden sich 57,2 % des eingesetzten Rutheniums in der Toluolphase, bestimmt durch Ermittlung des Rutheniumgehaltes der Ober- und Unterphase durch Atomadsorptionsspektroskopie. Die Unterphase wird abgetrennt und das Wasser sowie nicht umgesetztes Edukt und flüchtige Bestandteile am Rotationsverdampfer bei 20 mbar und 100°C entfernt, wobei 5,5 g (77,9 % Ausbeute) des reinen Produktes erhalten werden. Das mittlere Molekulargewicht der Oligomere wird wie in Beispiel 1 beschrieben bestimmt. Das Gewichtsmittel (RI) des erhaltenen Oigomers liegt bei 431 g/mol mit einer Dispersität (Mw/Mn) von 1,1. Dies entspricht einer mittleren Kettenlänge n des Oligomers $(CH_2CH_2NH)_n$ von 10.

b) Die Toluolphase (60 g) aus Beispiel 25a, welche den Großteil des Rutheniumkatalysators nach der Reaktion enthält und 10 g (164 mmol) frisches Ethanolamin werden in einen 250 mL Hastelloy C-Autoklav mit Blattrührer unter Inertbedingungen eingewogen. Das Reaktionsgemisch wird im verschlossenen Autoklaven bei 160°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser gegeben und 5 Minuten gerührt, wobei man eine Lösung (18,1 g) des Produktes in Wasser erhält. Nach der Reaktion und Wasserzugabe finden sich 82,0 % des eingesetzten Rutheniums in der Toluolphase, bestimmt durch Ermittlung des Rutheniumgehaltes der Ober- und Unterphase durch Atomadsorptionsspektroskopie. Die Unterphase wird abgetrennt und das Wasser sowie nicht umgesetztes Edukt und flüchtige Bestandteile am Rotationsverdampfer bei 20 mbar und 100°C entfernt, wobei 4,7 g (66,6 % Ausbeute) des reinen Produktes erhalten werden. Das mittlere Molekulargewicht der Oligomere wird wie in Beispiel 1 beschrieben bestimmt. Das Gewichtsmittel (RI) des erhaltenen Oligomers liegt bei 405 g/mol mit einer Dispersität (Mw/Mn) von 1,1. Dies entspricht einer mittleren Kettenlänge n des Oligomers $(CH_2CH_2NH)_n$ von 9.

Beispiel 26

a) In einem 250 mL Hastelloy C-Autoklav mit Blattrührer werden unter Inertbedingungen 0,5 g (0,54 mmol) $[Ru(PnOctyl_3)_4(H)_2]$, 0,6 g (3,0 mmol) Tri-n-butylphosphan, 0,2 g (1,8 mmol) Kalium-tert.-butylat 20,0 g (328 mmol) Ethanolamin und 60 g Toluol eingewogen. Das Reaktionsgemisch wird im verschlossenen Autoklaven bei 160°C unter einem Wasserstoffdruck von 30 bar für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 20 mL Wasser gegeben und 5 Minuten gerührt, wobei man eine Lösung (38,2 g) des Produktes in Wasser erhält. Nach der Reaktion und Wasserzugabe finden sich 97,6 % des eingesetzten Rutheniums in der Toluolphase, bestimmt durch Ermittlung des Rutheniumgehaltes der Ober- und Unterphase durch Atomadsorptionsspektroskopie. Die Unterphase wird abgetrennt und das Wasser sowie nicht umgesetztes Edukt und flüchtige Bestandteile am Rotationsverdampfer bei 20 mbar und 100°C entfernt, wobei 10,4 g (73,6 % Ausbeute) des reinen Produktes erhalten werden. Das mittlere Molekulargewicht der Polymere wird wie in Beispiel 1 beschrieben bestimmt. Das Gewichtsmittel (RI) des erhaltenen Polymers liegt bei 1170 g/mol mit einer Dispersität (Mw/Mn) von 3,3. Dies entspricht einer mittleren Kettenlänge n des Polymers $(CH_2CH_2NH)_n$ von 27.

b) Die Toluolphase (60 g) aus Beispiel 25a, welche den Großteil des Rutheniumkatalysators nach der Reaktion enthält und 10 g (164 mmol) frisches Ethanolamin werden in einen 250 mL Hastelloy C-Autoklav mit Blattrührer unter Inertbedingungen eingewogen. Das Reaktionsgemisch wird im verschlossenen Autoklaven bei 160°C unter dem Eigendruck des Lösungsmittels für 20 h gerührt. Nach vollendeter Reaktion und Abkühlen bilden sich zwei Phasen aus, wobei es sich bei der unteren der beiden Phasen um die Produktphase handelt. Zum Reaktionsgemisch werden 10 mL Wasser gegeben und 5 Minuten gerührt, wobei man eine Lösung des Produktes in Wasser erhält. Die Unterphase wird abgetrennt und das Wasser sowie nicht umgesetztes Edukt und flüchtige Bestandteile am Rotationsverdampfer bei 20 mbar und 100°C entfernt, wobei 6,6 g (93,5 % Ausbeute) des reinen Produktes erhalten werden. Das mittlere Molekulargewicht der Polymere wird wie in Beispiel 1 beschrieben bestimmt. Das Gewichtsmittel (RI) des erhaltenen Polymers liegt bei 2920 g/mol mit einer Dispersität (Mw/Mn) von 4,0. Dies entspricht einer mittleren Kettenlänge n des Polymers $(CH_2CH_2NH)_n$ von 68.

## Patentansprüche

1. Verfahren zur Herstellung von Polyalkylenpolyaminen durch katalysierte Alkohol-Aminierung, bei dem

   (i) aliphatische Aminoalkohole miteinander oder
   (ii) aliphatische Diamine oder Polyamine mit aliphatischen Diolen oder Polyolen unter Wasserabspaltung in Gegenwart eines Katalysators umgesetzt werden, **dadurch gekennzeichnet, dass** der Katalysator ein Übergangsmetallkomplexkatalysator ist, und dass der Katalysator homogen in dem Reaktionsmedium gelöst vorliegt.

2. Verfahren nach Anspruch 1, **dadurch gekennzeichnet, dass** der Katalysator mindestens ein Element der Gruppen 8, 9 und 10 des Periodensystems der Elemente enthält.

3. Verfahren nach Anspruch 1 oder 2, **dadurch gekennzeichnet, dass** der Katalysator Ruthenium oder Iridium enthält.

4. Verfahren nach einem der Ansprüche 1 bis 3, **dadurch gekennzeichnet, dass** der Katalysator einen einzähnigen oder mehrzähnigen Phosphin-Liganden enthält.

5. Verfahren nach Anspruch 4, **dadurch gekennzeichnet, dass** der Katalysator einen einzähnigen Phosphin-Liganden, ausgewählt aus der Gruppe bestehend aus Triphenylphosphin, Tritolylphosphin, Tri-n-butylphosphin, Tri-n-octylphosphin, Trimethylphosphin und Triethylphosphin enthält.

6. Verfahren nach Anspruch 4, **dadurch gekennzeichnet, dass** der Katalysator einen mehrzähnigen Phosphin-Liganden, ausgewählt aus der Gruppe bestehend aus Bis(diphenylphosphino)methan 1,2-Bis(diphenylphosphino)ethan, 1,2-Dimethyl-1,2-bis(diphenylphosphino)ethan, 1,2-Bis(dicyclohexylphosphino)ethan, 1,2-Bis(diethylphosphino)ethan, 1,3-Bis(diphenylphosphino)propan, 1,4-Bis(diphenylphosphino)butan, 1,5-Bis(diphenylphosphino)propan und 1,1,1-Tris(diphenylphosphinomethyl)ethan enthält.

7. Verfahren nach einem der Ansprüche 1 bis 6, **dadurch gekennzeichnet, dass** der Katalysator einen Liganden, ausgewählt aus der Gruppe bestehend aus Cyclopentadienyl, substituiertem Cyclopentadienyl, Indenyl und substituiertem Indenyl, enthält.

8. Verfahren nach einem der Ansprüche 1 bis 7, **dadurch gekennzeichnet, dass** der Katalysator einen Liganden, ausgewählt aus der Gruppe bestehend aus Hydroxid, Hydrid, Carbonyl und Chlorid, enthält.

9. Verfahren nach einem der Ansprüche 1 bis 8, **dadurch gekennzeichnet, dass** die Umsetzung in Gegenwart eines Lösungsmittels durchgeführt wird.

10. Verfahren nach Anspruch 9, **dadurch gekennzeichnet, dass** das Lösungsmittel ausgewählt ist aus der Gruppe bestehend aus der Gruppe bestehend aus Benzol, Toluol, Xylolen, Alkanen, acyclischen und cyclischen Ethern.

11. Verfahren nach einem der Ansprüche 1 bis 10, **dadurch gekennzeichnet, dass** (i) Monoethanolamin oder (ii) Ethylenglykol mit Ethylendiamin zu Polyethylenimin umgesetzt wird.

12. Polyalkylenpolyamine, erhältlich nach dem Verfahren gemäß einem der Ansprüche 1 bis 11.

13. Polyethylenimin, erhältlich nach dem Verfahren gemäß Anspruch 11.

14. Verwendungen der Polyalkylenpolyamine nach Anspruch 12 oder 13 als a) Haftvermittler für Druckfarben, b) Adhäsionspromotor in Komposit-Folien, c) Kohäsionspromotor für Klebstoffe, d) Vernetzer/Härter für Harze, e) Primer für Lacken, f) Nasshaftungspromotor für Dispersionsfarben, g) Komplexierungsmittel und Flockungsmittel, h) Penetrationshilfsmittel im Holzschutz, i) Korrosionsinhibitor, j) Immobilisierungsmittel von Proteinen und Enzymen.

## Claims

1. A process for the preparation of polyalkylenepolyamines by catalyzed alcohol amination, in which

   (i) aliphatic aminoalcohols are reacted with one another or

(ii) aliphatic diamines or polyamines are reacted with aliphatic diols or polyols with the elimination of water in the presence of a catalyst, wherein the catalyst is a transition metal complex catalyst and wherein the catalyst is present in homogeneously dissolved form in the reaction medium.

**2.** The process according to claim 1, wherein the catalyst comprises at least one element from groups 8, 9 and 10 of the Periodic Table of the Elements.

**3.** The process according to claim 1 or 2, **characterized in that** the catalyst comprises ruthenium or iridium.

**4.** The process according to any one of claims 1 to 3, wherein the catalyst comprises a monodentate or polydentate phosphine ligand.

**5.** The process according to claim 4, wherein the catalyst comprises a monodentate phosphine ligand selected from the group consisting of triphenylphosphine, tritolylphosphine, tri-n-butylphosphine, tri-n-octylphosphine, trimethylphosphine and triethylphosphine.

**6.** The process according to claim 4, wherein the catalyst comprises a polydentate phosphine ligand selected from the group consisting of bis(diphenylphosphino)methane 1,2-bis(diphenylphosphino)ethane, 1,2-dimethyl-1,2-bis(diphenylphosphino)ethane, 1,2-bis(dicyclohexylphosphino)ethane, 1,2-bis(diethylphosphino)ethane, 1,3-bis(diphenylphosphino)propane, 1,4-bis(diphenylphosphino)butane, 1,5-bis(diphenylphosphino)propane and 1,1,1-tris(diphenyl-phosphinomethyl)ethane.

**7.** The process according to any one of claims 1 to 6, wherein the catalyst comprises a ligand selected from the group consisting of cyclopentadienyl, substituted cyclopentadienyl, indenyl and substituted indenyl.

**8.** The process according to any one of claims 1 to 7, wherein the catalyst comprises a ligand selected from the group consisting of hydroxide, hydride, carbonyl and chloride.

**9.** The process according to any one of claims 1 to 8, wherein the reaction is carried out in the presence of a solvent.

**10.** The process according to claim 9, wherein the solvent is selected from the group consisting of the group consisting of benzene, toluene, xylenes, alkanes, acyclic and cyclic ethers.

**11.** The process according to any one of claims 1 to 10, wherein (i) monoethanolamine or (ii) ethylene glycol is reacted with ethylenediamine to give polyethyleneimine.

**12.** A polyalkylenepolyamine obtainable by the process according to any one of claims 1 to 11.

**13.** A polyethyleneimine obtainable by the process according to claim 11.

**14.** The use of the polyalkylenepolyamines according to claim 12 or 13 as a) adhesion promoter for printing inks, b) adhesion promoter in composite films, c) cohesion promoter for adhesives, d) crosslinker/hardener for resins, e) primer for coatings, f) wet adhesion promoter for emulsion paints, g) complexing agent and flocculating agent, h) penetration auxiliary in wood preservation, i) corrosion inhibitor, j) immobilizer of proteins and enzymes.

## Revendications

**1.** Procédé pour la préparation de polyalkylène-polyamines par amination catalysée d'alcools, dans lequel on fait réagir en présence d'un catalyseur

(I) des aminoalcools aliphatiques entre eux ou
(II) des diamines ou polyamines aliphatiques avec des diols ou polyols aliphatiques avec élimination d'eau, **caractérisé en ce que** le catalyseur est un catalyseur de type complexe de métal de transition, et **en ce que** le catalyseur est présent dissous de façon homogène dans le milieu réactionnel.

**2.** Procédé selon la revendication 1, **caractérisé en ce que** le catalyseur contient au moins un élément des groupes 8, 9 et 10 du système périodique des éléments.

**3.** Procédé selon la revendication 1 ou 2, **caractérisé en ce que** le catalyseur contient du ruthénium ou de l'indium.

**4.** Procédé selon l'une quelconque des revendications 1 à 3, **caractérisé en ce que** le catalyseur contient un ligand phosphine monodenté ou pluridenté.

**5.** Procédé selon la revendication 4, **caractérisé en ce que** le catalyseur contient un ligande phosphine monodenté, choisi dans le groupe constitué par la triphénylphosphine, la tritolylphosphine, la tri-n-butylphosphine, la tri-n-octylphosphine, la triméthylphosphine et la triéthylphosphine.

**6.** Procédé selon la revendication 4, **caractérisé en ce que** le catalyseur contient un ligand phosphine pluridenté, choisi dans le groupe constitué par le bis(diphénylphosphino)méthane, le 1,2-bis(diphénylphosphino)éthane, le 1,2-diméthyl-1,2-bis(diphénylphosphino)éthane, le 1,2-bis(dicyclohexylphosphino)-éthane, le 1,2-bis(diéthylphosphino)éthane, le 1,3-bis(diphénylphosphino)propane, le 1,4-bis(diphénylphosphino)butane, le 1,5-bis(diphénylphosphino)propane et le 1,1,1-tris(diphénylphosphinométhyl)éthane.

**7.** Procédé selon l'une quelconque des revendications 1 à 6, **caractérisé en ce que** le catalyseur est un ligand choisi dans le groupe consistant en cyclopentadiényle, cyclopentadiényle substitué, indényle et indényle substitué.

**8.** Procédé selon l'une quelconque des revendications 1 à 7, **caractérisé en ce que** le catalyseur contient un ligand choisi dans le groupe consistant en hydroxyde, hydrure, carbonyle et chlorure.

**9.** Procédé selon l'une quelconque des revendications 1 à 8, **caractérisé en ce qu'**on effectue la réaction en présence d'un solvant.

**10.** Procédé selon la revendication 9, **caractérisé en ce que** le solvant est choisi dans le groupe constitué par le benzène, le toluène, les xylènes, alcanes, éthers cycliques et éthers acycliques.

**11.** Procédé selon l'une quelconque des revendications 1 à 10, **caractérisé en ce qu'**on fait réagir (i) de la monoéthanolamine ou (ii) de l'éthylèneglycol avec de l'éthylènediamine pour obtenir une polyéthylène-imine.

**12.** Polyalkylène-polyamines, pouvant être obtenues conformément au procédé selon l'une quelconque des revendications 1 à 11.

**13.** Polyéthylène-imine, pouvant être obtenue conformément au procédé selon la revendication 11.

**14.** Utilisation des polyalkylène-polyamines selon la revendication 12 ou 13, en tant que a) promoteur d'adhérence pour encres d'impression, b) promoteur d'adhérence dans des films composites, c) promoteur de cohésion pour adhésifs, d) agent de réticulation/durcisseur pour résines, e) primaire pour peintures, f) promoteur d'adhérence en milieu humide pour peintures en dispersion, g) complexant et floculant, h) adjuvant de pénétration dans la protection du bois, i) agent anticorrosion, j) agent d'immobilisation de protéines et d'enzymes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3708539 A
- EP 0034480 A2
- EP 0239934 A1
- DE 2624135 A


### In der Beschreibung aufgeführte Nicht-Patentliteratur


- **AZIRIDINE, ULRICH STEUERLE ; ROBERT FEUERHAKE.** Ullmann's Encyclopedia of Industrial Chemistry. Wiley-VCH, 2006
- **Y. WATANABE ; Y. TSUJI ; Y. OHSUGI.** *Tetrahedron Lett.,* 1981, vol. 28, 2667-2670
- **K.I. FUJITA ; R. YAMAGUCHI.** *Synlett,* 2005, vol. 4, 560-571
- **A. TILLACK ; D. HOLLMANN ; K. MEVIUS ; D. MICHALIK ; S. BÄHN ; M. BELLER.** *Eur. J. Org. Chem.,* 2008, 4745-4750
- **A. TILLACK ; D. HOLLMANN ; D. MICHALIK ; M. BELLER.** *Tetrahedron Lett.,* 2006, vol. 47, 8881-8885
- **D. HOLLMANN ; S. BÄHN ; A. TILLACK ; M. BELLER.** *Angew. Chem. Int. Ed.,* 2007, vol. 46, 8291-8294
- **M. HANITI ; S.A. HAMID ; C.L. ALLEN ; G.W. LAMB ; A.C. MAXWELL ; H.C. MAYTUM ; A.J.A. WATSON ; J.M.J. WILLIAMS.** *J. Am. Chem. Soc,* 2009, vol. 131, 1766-1774
- **C. GUNANATHAN ; D. MILSTEIN.** *Angew. Chem. Int. Ed.,* 2008, vol. 47, 8661-8664